# EUROPÄISCHE PATENTANMELDUNG

(11) **EP 4 799 765 A1**
(43) Veröffentlichungstag der Anmeldung: **02.09.2026**
(21) Anmeldenummer: 25160333.8
(22) Anmeldetag: 26.02.2025
(51) Int. Cl.: B25F 5/00, B05C 17/005, H02P 5/74, H02P 5/68, H02P 7/03

(54) **BATTERIEBETRIEBENES ELEKTROWERKZEUG MIT ZWEI ELEKTROMOTORISCHEN ANTRIEBSEINHEITEN**

(71) Anmelder: Hilti Aktiengesellschaft, 9494 Schaan (LI)
(72) Erfinder: Lacher, Michael, 86830 Schwabmünchen (DE); Hurka, Florian, 86459 Margertshausen (DE); Larcher, Florian, 80689 München (DE); Hunger, Markus, 86899 Landsberg am Lech (DE)
(74) Vertreter: Hilti Aktiengesellschaft Corporate Intellectual Property

(57) **Zusammenfassung**

Die Erfindung betrifft ein batteriebetriebenes Elektrowerkzeug mit einem handhaltbaren Maschinen-gehäuse (1) zur Unterbringung von zwei elektromotorischen Antriebseinheiten (4a, 4b) für den separat ansteuerbaren Betrieb je zugeordneter Arbeitseinheiten (7a, 7b) sowie einer lösbar am Maschinengehäuse (1) befestigten Akkumulatoreinheit (3), wobei eine als ein B6-Umrichter ausgebildete gemeinsame Leistungselektronikeinheit (5) für beide elektromotorische Antriebseinheiten (4a, 4b) vorgesehen ist, welche überbrückend zwischen drei unabhängig voneinander ansteuerbaren Halbbrücken (8a, 8b, 8c) des B6-Umrichters angeordnet sind.

## Beschreibung

Die vorliegende Erfindung betrifft ein batteriebetriebenes Elektrowerkzeug mit einem handhaltbaren Maschinengehäuse zur Unterbringung von zwei elektromotorischen Antriebseinheiten für den separat ansteuerbaren Betrieb je zugeordneter Arbeitseinheiten sowie einer lösbar am Maschinengehäuse befestigten Akkumulatoreinheit.

Das Einsatzgebiet der Erfindung erstreckt sich vornehmlich auf Elektrowerkzeuge, wie beispielsweise Auspressgeräte oder Armierungseisenbindegeräte, welche mit zwei elektromotorischen Antriebseinheiten ausgestattet sind, um damit beispielsweise bei einem Auspressgerät zugeordnete Kartuschen unabhängig voneinander auszudrücken, so dass ein freies Mischverhältnis der Komponenten realisiert werden kann. Bei den erfindungsgegenständlichen Anwendungsfällen ist es erforderlich, für jede elektromotorische Antriebseinheit eine Leistungselektronik bereitzustellen, um entsprechende Ansteuersignale in Schaltsignale für die jeweilige elektromotorische Antriebseinheit umzuwandeln.

### Stand der Technik

Aus dem allgemein bekannten Stand der Technik gehen batteriebetriebene Elektrowerkzeuge mit zwei elektromotorischen Antriebseinheiten hervor, denen jeweils eine eigene Leistungselektronikeinheit zugeordnet ist. Die jeweilige Leistungselektronikeinheit ist im Falle von gebräuchlichen zweipoligen Gleichstrommotoren in der Struktur einer elektronischen H-Brücke mit vier Schaltelementen ausgebildet. Hiermit wird ein sogenannter Vierquadrantensteller realisiert. Die als Halbleiterschalter - meist aus Transistoren - ausgebildeten Schalter dienen nach Maßgabe einer entsprechenden Ansteuerung einer Umwandlung der von der Akkumulatoreinheit bereitgestellten Gleichspannung in eine zweite Spannung variabler Spannungshöhe, variabler Frequenz und variabler Pulsbreite. Das Grundgerüst eines solchen Vierquadrantenstellers besteht aus zwei mal zwei in Reihe geschalteten Halbleiterschaltern mit jeweils einer Freilaufdiode in Sperrpolung. In der Mitte zwischen den beiden Hälften liegt der anzusteuernde Gleichstrommotor. Je nach Betriebsweise arbeitet der Vierquadrantensteller als Tiefsetzsteller zum Antreiben oder als Hochsetzsteller zum Bremsen und ermöglicht zudem einen Wechsel der Polarität zur Drehrichtungsänderung.

Es ist die Aufgabe der vorliegenden Erfindung, ein gattungsgemäßes batteriebetriebenes Elektrowerkzeug mit zwei elektromotorischen Antriebseinheiten dahingehend weiter zu verbessern, dass der technische Aufwand für die Leistungselektronik bei gleichzeitiger Aufrechterhaltung einer flexiblen Ansteuerung reduziert wird.

### Offenbarung der Erfindung

Die Aufgabe wird ausgehend vom Oberbegriff des Anspruchs 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass eine als ein B6-Umrichter ausgebildete gemeinsame Leistungselektronikeinheit für beide elektromotorische Antriebseinheiten vorgesehen ist, welche überbrückend zwischen drei unabhängig voneinander ansteuerbaren Halbbrücken des B6-Umrichters angeordnet sind.

Mit anderen Worten wird also erfindungsgemäß eine Leistungselektronikeinheit mit drei Halbbrücken - welche insgesamt einen solchen B6-Umrichter ergeben - verwendet, wobei die einzelnen Halbbrücken unabhängig voneinander ansteuerbar sind. Die beiden elektromotorischen Antriebseinheiten werden vorzugsweise derart zwischen diese drei Halbbrücken angeordnet, dass jeweils ein Anschluss mit einer gemeinsamen mittleren Halbbrücke verbunden ist.

Der Vorteil der erfindungsgemäßen Lösung liegt insbesondere darin, dass der Bauteileaufwand für die Leistungselektronik durch Reduktion der notwendigen Schalter von acht auf sechs reduziert wird. Eine zusätzliche Synergie ergibt sich aus der Verwendung einer Leistungselektronikschaltung mit einem B6-Inverter, der ebenfalls in der Leistungselektronik für die hier interessierenden Antriebseinheiten Anwendung findet.

Vorzugsweise werden die Schalter der gemeinsamen Leistungselektronikeinheit derart verwendet, dass über die Stellung der Schalter der gemeinsamen mittleren Halbbrücke die Drehrichtung der elektromotorischen Antriebseinheit vorgegeben wird. Über die Stellung der Schalter der beiden äußeren Halbbrücken des B6-Umrichters wird dagegen die Drehzahl der elektromotorischen Antriebseinheit vorgegeben. Hierdurch lässt sich eine flexible Drehrichtungs-/Drehzahlsteuerung beider elektromotorischer Antriebseinheiten über eine die Leistungselektronik ansteuernde Steuereinheit realisieren. Die Spannungsversorgung über die Halbbrücken wird dabei vorzugsweise mit einem PWM-Signal vorgenommen.

Als Schalter kommen im Rahmen der gemeinsamen Leistungselektronik Halbleiter, vorzugsweise MOSFET-Schalter zum Einsatz, welche von der Steuerelektronikeinheit Gate-seitig angesteuert werden. Die Leistungselektronik kann unter Verwendung von äquivalenten Halbleitertechnologieen wie z.B. IGBT, SiC oder GAN realisiert werden.

Vorzugsweise kommen als elektromotorische Antriebseinheiten im Rahmen der vorliegenden Erfindung zweipolige Gleichstrommotoren zum Einsatz. Die hiermit angetriebenen Arbeitseinheiten können Funktionseinheiten des Elektrowerkzeugs sein, welche ausgewählt sind aus einer Gruppe, umfassend: Zahnradgetriebe, Kurbeltrieb, Werkzeugaufnahme, Schubstangengetriebe, Kugelumlaufgetriebe und dergleichen.

### Detailbeschreibung anhand Zeichnung

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine Seitenansicht eines batteriebetriebenen Elektrowerkzeugs,
- Fig. 2: ein Blockschaltbild der elektrischen Antriebskomponenten des Elektrowerkzeugs, und
- Fig. 3: ein elektronisches Schaltbild einer gemeinsamen Leistungselektronikeinheit für zwei elektromotorische Antriebseinheiten des batteriebetriebenen Elektrowerkzeugs.

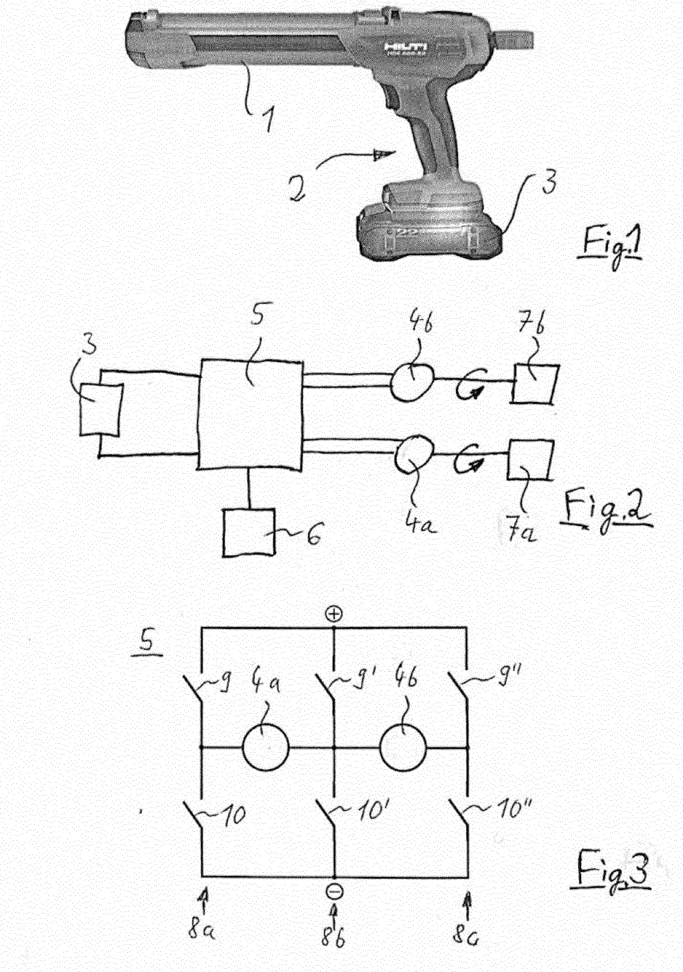

Gemäß Fig. 1 umfasst ein hier exemplarisch als Auspressgerät für Fugenmörtel, chemische Dübel oder Dichtmittel ausgebildetes batteriebetriebenes Elektrowerkzeug ein handhaltbares Maschinengehäuse 1 zur Unterbringung von - hier nicht weiter dargestellten - elektromotorischen Antriebseinheiten nebst Steuerungselektronik sowie zugeordneter Arbeitseinheiten, an welchem ein Griffabschnitt 2 angeformt ist. Unterseitig des Griffabschnitts 2 ist eine lösbar am Maschinengehäuse 1 befestigte Akkumulatoreinheit 3 angeordnet.

Gemäß Fig. 2 ist die Akkumulatoreinheit 3 an eine für zwei elektromotorische Antriebseinheiten 4a und 4b gemeinsame Leistungselektronikeinheit 5 angeschlossen. Die beiden elektromotorischen Antriebseinheiten 4a und 4b sind als zweipolige Gleichstrommotoren ausgebildet.

Die elektromotorischen Antriebseinheiten 4a und 4b werden von einer der gemeinsamen Leistungselektronikeinheit 5 vorgeschalteten Steuerelektronikeinheit 6 angesteuert. Die erste elektromotorische Antriebseinheit 4a treibt eine zugeordnete erste Arbeitseinheit 7a in Form eines ersten Schubstangengetriebes an. Die zweite elektromotorische Antriebseinheit 4b treibt eine zugeordnete zweite Arbeitseinheit 7b in Form eines zweiten Schubstangengetriebes an.

Gemäß Fig. 3 ist die hier als elektronisches Schaltbild dargestellte gemeinsame Leistungselektronikeinheit 5 nach Art eines B6-Umrichters konzipiert. Die gemeinsame Leistungselektronikeinheit 5 umfasst drei unabhängig voneinander ansteuerbare Halbbrücken 8a, 8b und 8c, wobei die beiden elektromotorischen Antriebseinheiten 4a und 4b derart zwischen benachbarten Halbbrücken 8a und 8b beziehungsweise 8b und 8c geschaltet sind, dass jeweils ein Anschluss der elektromotorischen Antriebseinheiten 4a und 4b mit einer gemeinsamen mittleren Halbbrücke 8b verbunden sind. Alle ersten Schalter 9, 9', 9" sowie auch alle zweiten Schalter 10, 10' sowie 10" der gemeinsamen Leistungselektronikeinheit 5 sind bei diesem Ausführungsbeispiel als MOSFET-Schalter ausgebildet, welche Gate-seitig von der vorstehend erwähnten - hier nicht weiter dargestellten - Steuerelektronikeinheit nach Maßgabe der nachfolgend beschriebenen Funktion angesteuert werden.

Über die Stellung der Schalter 9' und 10' der gemeinsamen mittleren Halbbrücke 8b lässt sich die Drehrichtung der elektromotorischen Antriebseinheiten 4a und 4b vorgeben. Über die Stellung der Schalter 9 und 10 beziehungsweise 9" und 10" der beiden äußeren Halbbrücken 8a beziehungsweise 8c lässt sich die Drehzahl der elektromotorischen Antriebseinheiten 4a und 4b vorgeben.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, anstelle eines Auspressgeräts ein anderes batteriebetriebenes Elektrowerkzeug mit zwei separaten elektromotorischen Antriebseinheiten mit der erfindungsgemäßen gemeinsamen Leistungselektronikeinheit zu betreiben.

### Bezugszeichenliste

- 1: Maschinengehäuse
- 2: Griffabschnitt
- 3: Akkumulatoreinheit
- 4: elektromotorische Antriebseinheit
- 5: Leistungselektronikeinheit
- 6: Steuerelektronikeinheit
- 7: Arbeitseinheit
- 8: Halbbrücke
- 9: erster Schalter
- 10: zweiter Schalter

## Patentansprüche

1. Batteriebetriebenes Elektrowerkzeug mit einem handhaltbaren Maschinengehäuse (1) zur Unterbringung von zwei elektromotorischen Antriebseinheiten (4a, 4b) für den separat ansteuerbaren Betrieb je zugeordneter Arbeitseinheiten (7a, 7b) sowie einer lösbar am Maschinengehäuse (1) befestigten Akkumulatoreinheit (3),
**dadurch gekennzeichnet, dass** eine als ein B6-Umrichter ausgebildete gemeinsame Leistungselektronikeinheit (5) für beide elektromotorische Antriebseinheiten (4a, 4b) vorgesehen ist, welche überbrückend zwischen drei unabhängig voneinander ansteuerbaren Halbbrücken (8a, 8b, 8c) des B6-Umrichters angeordnet sind.

2. Batteriebetriebenes Elektrowerkzeug nach Anspruch 1,
**dadurch gekennzeichnet, dass** die beiden elektromotorischen Antriebseinheiten (4a, 4b) derart zwischen benachbarte Halbbrücken (8a, 8b; 8b, 8c) geschaltet sind, dass jeweils ein Anschluss der elektromotorischen Antriebseinheit (4a, 4b) mit einer gemeinsamen mittleren Halbbrücke (8b) verbunden ist.

3. Batteriebetriebenes Elektrowerkzeug nach Anspruch 2,
**dadurch gekennzeichnet, dass** über die Stellung der Schalter (9', 10') der gemeinsamen mittleren Halbbrücke (8b) die Drehrichtung der elektromotorischen Antriebseinheit (4a, 4b) vorgebbar ist.

4. Batteriebetriebenes Elektrowerkzeug nach Anspruch 2,
**dadurch gekennzeichnet, dass** über die Stellung der Schalter (9, 10; 9", 10") der beiden äußeren Halbbrücken (8a, 8c) die Drehzahl der elektromotorischen Antriebseinheit (4a, 4b) vorgebbar ist.

5. Batteriebetriebenes Elektrowerkzeug nach einem der vorstehenden Ansprüche, **dadurch gekennzeichnet, dass** die Spannungsversorgung der elektromotorischen Antriebseinheiten (4a, 4b) über die Halbbrücken (8a, 8b, 8c) mit einem PWM-Signal erfolgt.

6. Batteriebetriebenes Elektrowerkzeug nach einem der vorstehenden Ansprüche, **dadurch gekennzeichnet, dass** die Schalter (9, 10, 9', 10', 9", 10") als Halbleiter, vorzugsweise MOSFET-Schalter, ausgebildet sind, welche von einer Steuerelektronikeinheit (6) angesteuert sind.

7. Batteriebetriebenes Elektrowerkzeug nach einem der vorstehenden Ansprüche, **dadurch gekennzeichnet, dass** die Arbeitseinheiten (7a, 7b) rotatorisch antreibbare Funktionseinheiten sind, die ausgewählt sind aus einer Gruppe, umfassend: Zahnradgetriebe, Kurbeltrieb, Werkzeugaufnahme, Schubstangengetriebe, Kugelumlaufgetriebe.

8. Batteriebetriebenes Elektrowerkzeug nach einem der vorstehenden Ansprüche, **dadurch gekennzeichnet, dass** die elektromotorischen Antriebseinheiten (4a, 4b) als zweipolige Gleichstrommotoren ausgebildet sind.
